# EUROPEAN PATENT SPECIFICATION

(11) **EP 3 023 231 B1**
(45) Date of publication and mention of the grant of the patent: **06.01.2021**
(21) Application number: 14193766.4
(22) Date of filing: 18.11.2014
(51) Int. Cl.: B29C 70/34, B29C 70/44, B29C 43/36

(54) **Systems and methods for compacting a charge of composite material**
Systeme und Verfahren zum Verdichten einer Ladung aus Verbundwerkstoff
Systèmes et procédés pour compacter une charge de matériau composite

(43) Date of publication of application: 25.05.2016
(73) Proprietor: The Boeing Company, Chicago, IL 60606-1596 (US)
(72) Inventor: Robins, Brian Gregory, Tukwila, WA Washington 98108 (US); Rotter, Daniel M., Tukwila, WA Washington 98108 (US); Davis, Kieran P., Tukwila, WA Washington 98108 (US); King, Mark E., Tukwila, WA Washington 98108 (US)
(74) Representative: Howson, Richard Giles Bentham

(56) References cited:
- US-A- 2 441 097
- US-A- 4 280 804
- US-A1- 2013 042 978

## Description

### FIELD

The present disclosure is directed generally to systems and methods for compacting a charge of composite material and more particularly to systems and methods that utilize a reusable vacuum compaction device to compact the charge of composite material.

### BACKGROUND

It will be understood that a "charge" of composite material is, for example, a quantity, mass and/or patch of composite material. It may comprise one or a plurality of plies of composite material. For example, the charge may be a "lay up" comprising a plurality of un-cured plies of pre-impregnated composite material layed up relative to each other for use in forming part of a composite structure. Assembly of a composite structure may involve locating a charge of composite material on a layup mandrel and subsequently compacting the charge of composite material on the layup mandrel to form an intermediate structure that includes a compacted charge of composite material and the layup mandrel. The compacting may decrease a thickness of the charge of the composite material, remove void space from within the charge of composite material, increase adhesion among a plurality of layers, or plies, that may be present within the charge of composite material, increase adhesion between the charge of composite material and the layup mandrel, increase adhesion between the charge of composite material and materials that already may be present on the layup mandrel, and/or otherwise prepare the intermediate structure for further processing.

Historically, the compacting has been accomplished by a "bagging" process, wherein the charge of composite material and a portion of the layup mandrel are covered with a thin, flexible, polymeric sheet. The polymeric sheet is then taped to the layup mandrel to isolate (or at least substantially isolate) an enclosed volume from fluid communication with the ambient environment. Subsequently, a vacuum is applied to the enclosed volume to decrease a pressure therein, and atmospheric pressure acts upon the charge of composite material, thereby compacting the charge of composite material.

While the above-described procedure may be effective at compacting the charge of composite material, it is a time-consuming, labor-intensive, and material-intensive process that requires custom-fitting the polymeric sheet and manually taping the polymeric sheet to the layup mandrel. In addition, compaction of the charge of composite material onto a surface of the layup mandrel (such as an interior surface thereof) may require oversized polymer sheets that may extend to, past, and/or around a perimeter, or outer perimeter, of the layup mandrel and/or may require correspondingly long lengths of tape so as to prevent contamination of existing materials that may be present on the surface of the layup mandrel. Thus, there exists a need for improved systems and methods for compacting charges of composite material.

### SUMMARY

According on one aspect, there is provided a vacuum compaction device as defined in claim 1 of the appended claims.

The device may be open on the first side thereof. The enclosed volume may be between the first side and the supporting surface.

According to another aspect, there is provided a method as defined in claim 10.

The method may comprise using the device to carry out steps of the method.

These systems and methods may utilize a vacuum compaction device to compact the charge of composite material on a supporting surface. The vacuum compaction device may be reusable and may be configured to define an enclosed volume when positioned on the supporting surface and may include a barrier structure and a sealing structure that is configured to form a fluid seal when compressed between the supporting surface and the barrier structure. The vacuum compaction device also may include a vacuum distribution manifold that is in fluid communication with and configured to selectively apply a vacuum to the enclosed volume. Application of the vacuum to the enclosed volume may decrease a pressure within the enclosed volume and transition the vacuum compaction device from an undeformed configuration to a deformed configuration, thereby compacting the charge of composite material on the supporting surface.

In some examples, the barrier structure may be at least substantially planar when the vacuum compaction device is in the undeformed configuration and may at least partially conform to a contour of the supporting surface when the vacuum compaction device is in the deformed configuration. In some examples, the barrier structure may define a plurality of evacuation conduits that provide fluid communication between the vacuum distribution manifold and the enclosed volume. In some examples, the barrier structure also may define a plurality of retention conduits that are configured to retain the charge of composite material on a first side of the barrier structure prior to the charge of composite material being compacted on the supporting surface. In some examples, the barrier structure may include and/or be a double-walled panel that defines a plurality of elongate channels.

In some examples, the supporting surface includes a layup mandrel. In some examples, the supporting surface includes a previously compacted charge of composite material.

### BRIEF DESCRIPTION OF THE DRAWINGS

Fig. 1 is an illustrative, non-exclusive example of an aircraft that includes a composite structure that may be formed using the systems and methods according to the present disclosure.
Fig. 2 is an illustrative, non-exclusive example of a fuselage barrel that includes a composite structure that may be formed using the systems and methods according to the present disclosure.
Fig. 3 is a schematic cross-sectional view of illustrative, non-exclusive examples of a vacuum compaction device according to the present disclosure, wherein the vacuum compaction device is not positioned on a supporting surface.
Fig. 4 is a schematic bottom view of the vacuum compaction device of Fig. 3.
Fig. 5 is a schematic cross-sectional view of the vacuum compaction device of Fig. 3, wherein the vacuum compaction device is positioned on the supporting surface and in an undeformed configuration.
Fig. 6 is a schematic cross-sectional view of the vacuum compaction device of Fig. 3, wherein the vacuum compaction device is positioned on the supporting surface, is in a deformed configuration, and is compacting a charge of composite material.
Fig. 7 is a schematic cross-sectional view of the vacuum compaction device of Fig. 3, wherein the vacuum compaction device has finished compacting the charge of composite material, has been returned to the undeformed configuration, and has been separated from the supporting surface.
Fig. 8 is a schematic cross-sectional view of illustrative, non-exclusive examples of a vacuum compaction device according to the present disclosure compacting a charge of composite material on a convex surface.
Fig. 9 is a schematic cross-sectional view of illustrative, non-exclusive examples of a vacuum compaction device according to the present disclosure compacting a charge of composite material on a concave surface.
Fig. 10 is a schematic cross-sectional view of illustrative, non-exclusive examples of a vacuum compaction device according to the present disclosure sealing against a supporting surface that is at least partially defined by a previously compacted charge of composite material.
Fig. 11 is a schematic fragmentary view of illustrative, non-exclusive examples of a barrier structure that may be utilized with the systems and methods according to the present disclosure.
Fig. 12 is a flowchart depicting methods according to the present disclosure of compacting a charge of composite material.
Fig. 13 is a flow diagram of aircraft production and service methodology.
Fig. 14 is a block diagram of an aircraft.

### DESCRIPTION

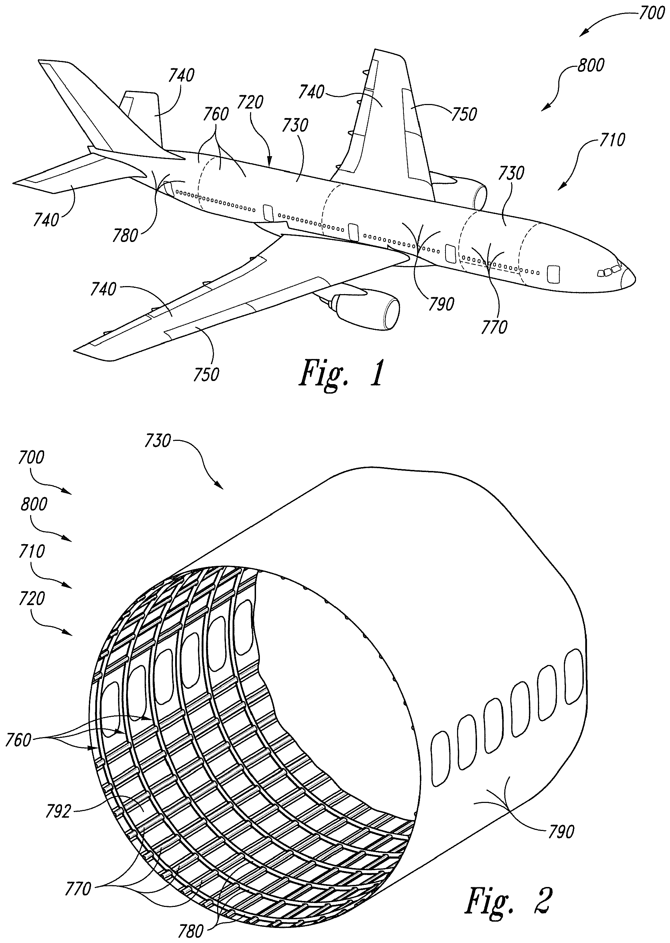

Figs. 1-11 provide illustrative, non-exclusive examples of composite structures 800, composite structure fabrication assemblies 20, and/or components thereof according to the present disclosure. Elements that serve a similar, or at least substantially similar, purpose are labeled with like numbers in each of Figs. 1-11, and these elements may not be discussed in detail herein with reference to each of Figs. 1-11. Similarly, all elements may not be labeled in each of Figs. 1-11, but reference numerals associated therewith may still be utilized herein for consistency. In general, elements that are likely to be included in a given embodiment are shown in solid lines, while elements that are optional to a given embodiment are shown in dashed lines. However, elements that are shown in solid lines are not essential to all embodiments, and an element shown in solid lines may be omitted from a particular embodiment without departing from the scope of the present disclosure.

Fig. 1 is an illustrative, non-exclusive example of an aircraft 700 that includes a composite structure 800 that may be formed using the systems and methods according to the present disclosure, and Fig. 2 is an illustrative, non-exclusive example of a fuselage barrel 730 that may form a portion of aircraft 700 and includes composite structure 800. Aircraft 700 and/or composite structure 800 thereof may include a plurality of skin segments 790 that may form, cover, and/or be an outer surface of any suitable portion of aircraft 700. As illustrated most clearly in Fig. 2, aircraft 700 also may include a plurality of stringers 770 that, together with a plurality of frames 780, may support an inner surface 792 of skin segments 790. A plurality of fillers 760 may extend between frames 780 and inner surface 792 and may form a portion of composite structure 800.

It is within the scope of the present disclosure that any suitable portion of aircraft 700 may be formed from and/or be composite structure 800. As illustrative, non-exclusive examples, composite structure 800 may form, or form a portion of, an airframe 710, a fuselage 720, a fuselage barrel 730, a wing 740, and/or a stabilizer 750 of aircraft 700.

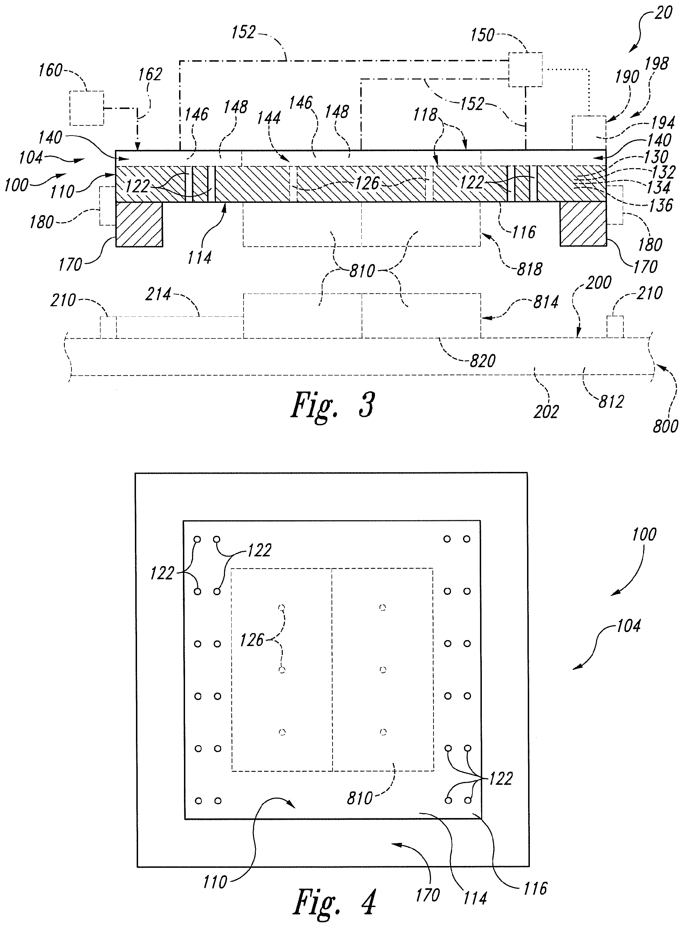

Figs. 3-7 provide schematic cross-sectional views of illustrative, non-exclusive examples of a vacuum compaction device 100 according to the present disclosure that may be utilized in and/or form a portion of composite structure fabrication assembly 20. Vacuum compaction device 100 of Figs. 3-7 includes a barrier structure 110 that includes a first side 114 and an opposed second side 118. Vacuum compaction device 100 further includes a vacuum distribution manifold 140. Vacuum distribution manifold 140 is in fluid communication with first side 114 of barrier structure 110 through a plurality of evacuation conduits 122 that may be defined within barrier structure 110 and is configured to selectively apply a vacuum to the plurality of evacuation conduits 122. The vacuum compaction device 100 also includes a sealing structure 170 that may be located between barrier structure 110 and a supporting surface 200, may be located on first side 114 of barrier structure 110, and/or may be operatively attached to first side 114 of barrier structure 110. Sealing structure 170 is configured to form a fluid seal between barrier structure 110 and supporting surface 200 when sealing structure 170 is compressed between barrier structure 110 and supporting surface 200.

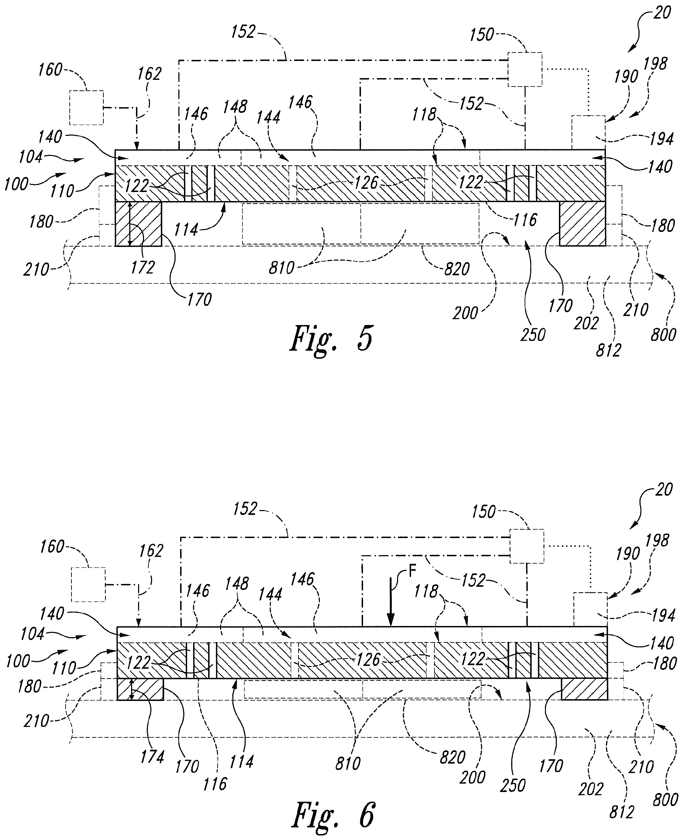

As illustrated in Figs. 5-6, vacuum compaction device 100 and supporting surface 200 together may define an enclosed volume 250 when vacuum compaction device 100 is positioned on supporting surface 200. Under these conditions, vacuum distribution manifold 140 is in fluid communication with enclosed volume 250 via evacuation conduits 122 and is configured to selectively apply the vacuum to enclosed volume 250 to decrease a pressure therein.

As illustrated in dashed lines in Figs. 3-7, barrier structure 110 further may define a plurality of retention conduits 126 that provide fluid communication between a second vacuum distribution manifold 144, which also may be referred to herein as a retention manifold 144, and first side 114 of vacuum compaction device 100. In addition, composite structure fabrication assembly 20 further may include and/or be in fluid communication with a vacuum source 150 that is configured to generate a vacuum 152, as illustrated in dash-dot lines, that may be applied to evacuation conduits 122 by vacuum distribution manifold 140 and/or to generate vacuum 152 that may be applied to retention conduits 126 by second vacuum distribution manifold 144. When barrier structure 110 defines both evacuation conduits 122 and retention conduits 126, vacuum distribution manifold 140 also may be referred to herein as first vacuum distribution manifold 140 and/or evacuation manifold 140.

As also illustrated in dashed lines, vacuum compaction device 100 further may include one or more indexing structures 180 that are configured to align, index, and/or otherwise locate vacuum compaction device 100 relative to supporting surface 200 when vacuum compaction device 100 is positioned on supporting surface 200. Similarly, supporting surface 200 may include one or more complimentary indexing structures 210 that are configured to mate with, receive, and/or be received by indexing structures 180 when vacuum compaction device 100 is properly aligned on supporting surface 200.

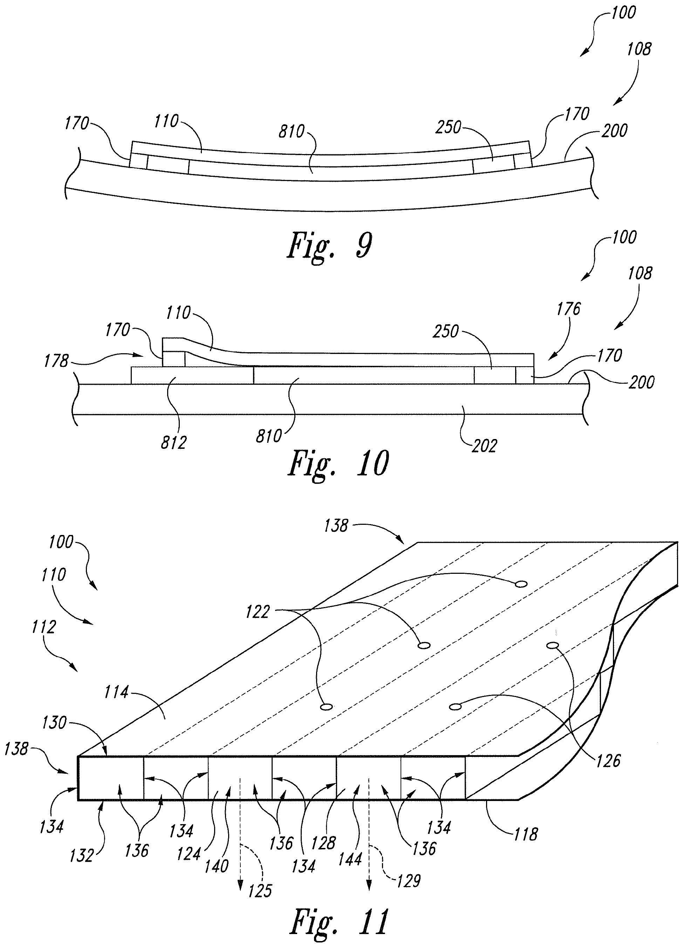

As illustrated in Fig. 3 and discussed in more detail herein with reference to methods 400 of Fig. 11, a charge 810 of composite material may be located between vacuum compaction device 100 and supporting surface 200. It is envisaged that "charge" has the meaning set out in the Background section above and as further described herein below. Locating the charge 810 may include locating charge 810 on supporting surface 200, as indicated at 814, and/or locating charge 810 on first side 114 of barrier structure 110, as indicated at 818; and it is within the scope of the present disclosure that the locating may include locating any suitable number of charges 810 of composite material, such as 1, 2, 3, 4, 5, 10, or more than 10 charges of composite material, between vacuum compaction device 100 and supporting surface 200.

When charge 810 is placed on supporting surface 200, an alignment jig 214 may be utilized to accurately position charge 810 on supporting surface 200 and/or relative to any suitable structure and/or feature thereof, such as indexing structure 210. In addition, an adhesive 820 may be located between the supporting surface and charge 810 of composite material. This may include locating adhesive 820 on supporting surface 200 prior to placing charge 810 on supporting surface 200 and/or locating adhesive 820 on charge 810 prior to placing charge 810 on supporting surface 200.

When charge 810 is placed on first side 114 of barrier structure 110, the vacuum may be applied to retention conduits 126 to retain charge 810 on first side 114. As illustrated in Fig. 4, which is a schematic bottom view of vacuum compaction device 100 of Fig. 3, retention conduits 126 may be positioned such that charge 810 is positioned over and/or covering retention conduits 126. Thus, and when the vacuum is applied to retention conduits 126, this vacuum may decrease the pressure locally in a region between first side 114 and charge 810, thereby retaining charge 810 of composite material on first side 114 of barrier structure 110.

Subsequent to charge 810 being located between vacuum compaction device 100 and supporting surface 200, and as illustrated in Fig. 5, vacuum compaction device 100 may be positioned on supporting surface 200 to define enclosed volume 250. This may include aligning vacuum compaction device 100 with supporting surface 200, such as through the use of indexing structures 180 and 210.

It is within the scope of the present disclosure that the positioning may be accomplished in any suitable manner. As illustrative, non-exclusive examples, the positioning may include manually positioning vacuum compaction device 100 and/or automatically positioning vacuum compaction device 100. When vacuum compaction device 100 is automatically positioned on supporting surface 200, an automated positioning structure 190, such as an assembly robot 194, may be programmed to position vacuum compaction device 100 on supporting surface 200 and/or to locate charge 810 in the desired region of supporting surface 200. Automated positioning structure 190 may be programmed to compact any suitable number of charges 810 of composite material on supporting surface 200 using any of the methods 400 that are discussed in more detail herein.

After vacuum compaction device 100 is positioned on supporting surface 200, and as illustrated in Fig. 6, a pressure within enclosed volume 250 may be decreased. This may include selectively applying the vacuum from vacuum source 150 to enclosed volume 250, such as through vacuum distribution manifold 140 and/or evacuation conduits 122. Decreasing the pressure within enclosed volume 250 may create a pressure differential across vacuum compaction device 100, thereby generating an atmospheric pressure force, F, which may act on and/or be applied to vacuum compaction device 100.

Application of the atmospheric pressure force to vacuum compaction device 100 may transition vacuum compaction device 100 from an undeformed configuration 104, such as is illustrated in Figs. 3-5 and 7, to a deformed configuration 108, such as is illustrated in Figs. 6 and 8-10, thereby causing vacuum compaction device 100 and/or barrier structure 110 thereof to compress charge 810 between vacuum compaction device 100 and supporting surface 200 and generate a compacted charge 812 of composite material. This compression may serve as a motive force for compaction of charge 810 against and/or on supporting surface 200, such as to decrease a thickness of charge 810, to remove air from charge 810, to remove void space from charge 810, to increase interlayer adhesion among a plurality of composite plies that may comprise charge 810, and/or to increase adhesion between charge 810 and supporting surface 200.

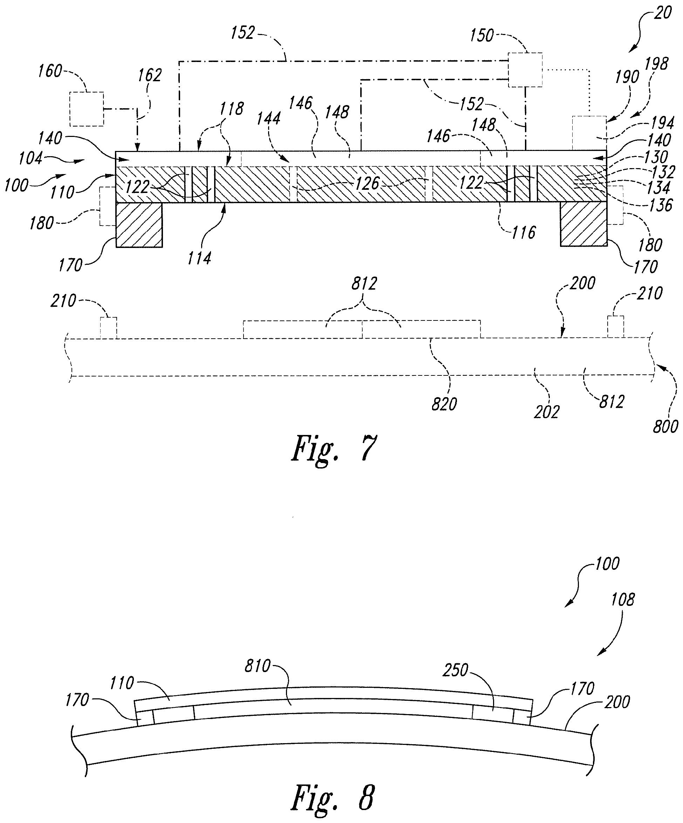

Subsequent to compaction of charge 810 on supporting surface 200, the pressure within enclosed volume 250 may be increased. This may include ceasing the application of vacuum 152 to enclosed volume 250 from vacuum source 150 and/or selectively providing a bleed gas stream 162 (as illustrated in dash-dot lines) to enclosed volume 250, such as through a bleed valve 160. Increasing the pressure within enclosed volume 250 may decrease and/or eliminate atmospheric pressure force, F, and permit vacuum compaction device 100 to return to undeformed configuration 104, as illustrated in Fig. 7. Subsequently, and as also illustrated in Fig. 7, vacuum compaction device 100 may be separated from supporting surface 200. However, compacted charge 812 may remain on supporting surface 200.

This process may be repeated any suitable number of times to compact any suitable number of charges 810 of the composite material on supporting surface 200, thereby forming at least a portion of composite structure 800. In addition, automated positioning structure 190 also may include, be in communication with, and/or form a portion of a control system 198, which further may be programmed to control the operation of vacuum source 150, may control the operation of bleed valve 160, may control the application of vacuum from vacuum source 150 to vacuum distribution manifolds 140 and/or 144, and/or may control the flow of bleed stream 162. This may include controlling using any of the methods 400 that are discussed herein.

It is within the scope of the present disclosure that vacuum compaction device 100 may be a reusable vacuum compaction device 100. As such, the vacuum compaction device 100 may be adapted, configured, designed, selected, and/or constructed to be reused (or to be utilized a plurality of times) to compact a plurality of charges 810 of composite material on supporting surface 200. Additionally or alternatively, the vacuum compaction device 100 (any or any suitable component thereof) also may be adapted, configured, designed, selected, and/or constructed to transition between the undeformed configuration 104 and the deformed configuration 108 a plurality of times without damage to the vacuum compaction device100 and/or to compact the plurality of charges 810 of composite material on the supporting surface 200 without damage to the vacuum compaction device 100.

After compaction of a target, or desired, number of charges 810 of composite material on supporting surface 200, a composite structure 800 that is formed from and/or includes the charges 810 of composite material may receive further processing prior to completion thereof. As an illustrative, non-exclusive example, composite structure 800 may be cured. As another illustrative, non-exclusive example, a layup mandrel 202, which may form at least a portion of supporting surface 200 and/or may support at least a portion of the plurality of charges 810 may be removed and/or separated from composite structure 800.

Returning more generally to Figs. 3-7, barrier structure 110 may be configured to define evacuation conduits 122, retention conduits 126, first side 114, and/or second side 118. In addition, barrier structure 110 may function as and/or be an at least partial barrier to fluid flow between enclosed volume 250 and an ambient environment that surrounds vacuum compaction device 100.

Barrier structure 110 may include and/or define any suitable shape, conformation, profile, and/or contour. As illustrative, non-exclusive examples, and at least when in undeformed configuration 104, barrier structure 110 may define a planar, or at least substantially planar, conformation, shape, profile, and/or contour, such as may be defined by first side 114 and/or second side 118 thereof.

As an additional illustrative, non-exclusive example, and as discussed in more detail herein with reference to Fig. 11, barrier structure 110 may be defined by a first planar wall 130, a second planar wall 132, and a plurality of elongate webs 134 that extend between first planar wall 130 and second planar wall 132 to define a plurality of elongate channels 136. When barrier structure 110 defines elongate channels 136, at least a portion of the elongate channels may be in fluid communication with evacuation conduits 122 and/or retention conduits 126. Additionally or alternatively, the portion of elongate channels 136 may form a portion of vacuum distribution manifold 140 and/or second vacuum distribution manifold 144.

Additionally or alternatively, barrier structure 110 also may include and/or be formed from any suitable material. As illustrative, non-exclusive examples, barrier structure 110 may include and/or be formed from a flexible material and/or a resilient material. As additional illustrative, non-exclusive examples, barrier structure 110 may include and/or be formed from an optically transparent material, a semi-transparent material, and/or a translucent material, such as to permit visual inspection of charge 810 and/or supporting surface 200 when vacuum compaction device 100 is positioned on supporting surface 200. As additional illustrative, non-exclusive examples, barrier structure 110 also may be formed from and/or include a polymeric material and/or a polycarbonate material.

As illustrated in dashed lines in Figs. 3-7, first side 114 of barrier structure 110 further may include and/or be defined by a release surface 116. Release surface 116 may be configured and/or selected to decrease, or decrease a potential for, adhesion between charge 810 and barrier structure 110, chemical reaction between charge 810 and barrier structure 110, and/or contamination of charge 810 by barrier structure 110. It is within the scope of the present disclosure that release surface 116 may be fabricated from any suitable material, including the same material as barrier structure 110 or a different material than barrier structure 110. Illustrative, non-exclusive examples of materials that may comprise release surface 116 include chemically inert materials, such as fluoropolymers.

Vacuum distribution manifold 140 and/or second vacuum distribution manifold 144, which also may be referred to herein as vacuum distribution manifolds 140 and 144, may include and/or be any suitable structure that is configured to selectively provide fluid communication between evacuation conduits 122 and/or retention conduits 126 and vacuum source 150. As illustrated in Figs. 3 and 5-7 and discussed herein, it is within the scope of the present disclosure that at least a portion of vacuum distribution manifolds 140 and/or 144 may be defined by and/or within barrier structure 110. As an illustrative, non-exclusive example, elongate channels 136 may define a portion of vacuum distribution manifolds 140 and/or 144. However, it is also within the scope of the present disclosure that at least a portion of vacuum distribution manifolds 140 and/or 144 may be separate and/or distinct from barrier structure 110, as illustrated by the dashed line separating manifolds 140 and 144 from barrier structure 110.

Vacuum distribution manifolds 140 and/or 144 also may include any suitable additional structure. As an illustrative, non-exclusive example, at least one of vacuum distribution manifolds 140 and/or 144 may include a pressure detector 146 that is configured to detect a pressure within vacuum distribution manifolds 140 and/or 144 and/or within enclosed volume 250. As another illustrative, non-exclusive example, at least one of vacuum distribution manifolds 140 and/or 144 may include a vacuum control structure 148, such as a valve, that may be configured to selectively apply the vacuum from vacuum source 150 to vacuum distribution manifolds 140 and/or 144, evacuation conduits 122, retention conduits 126, and/or enclosed volume 250. When vacuum distribution manifolds 140 and/or 144 include vacuum control structure 148, it is within the scope of the present disclosure that vacuum control structure 148 may be actuated in any suitable manner. As an illustrative, non-exclusive example, vacuum control structure 148 may be manually actuated. As another illustrative, non-exclusive example, vacuum control structure 148 may be automatically actuated, such as via control system 198 and/or using methods 400 that are discussed herein.

Sealing structure 170 may include any suitable structure that may form the fluid seal between barrier structure 110 and supporting surface 200 when vacuum compaction device 100 is positioned on supporting surface 200. As illustrative, non-exclusive examples, sealing structure 170 may include and/or be a compression seal, a resilient seal, and/or a tubular resilient seal that may be formed from any suitable material, illustrative, non-exclusive examples of which include a resilient material, a polymeric material, latex, and/or urethane. This may include materials that do not adhere to, chemically react with, and/or transfer a contaminant to supporting surface 200.

Furthermore, sealing structure 170 may be located and/or configured in any suitable manner within vacuum compaction device 100 that may permit formation of the fluid seal. As an illustrative, non-exclusive example, sealing structure 170 may be located between barrier structure 110 and supporting surface 200. As another illustrative, non-exclusive example, sealing structure 170 may be located on and/or operatively attached to first side 114 of barrier structure 110.

It is within the scope of the present disclosure that sealing structure 170 may be configured to reversibly compress and/or deform when forming the fluid seal between barrier structure 110 and supporting surface 200. Thus sealing structure 170 may include and/or define an undeformed thickness 172 when vacuum compaction device 100 is in undeformed configuration 104 (as illustrated in Fig. 5) and a deformed thickness 174 when vacuum compaction device 100 is in deformed configuration 108 (as illustrated in Fig. 6). As further illustrated in Figs. 5-6, deformed thickness 174 may be less than undeformed thickness 172. This deformation of sealing structure 170 when compressed between barrier structure 110 and supporting surface 200 (such as when the pressure within enclosed volume 250 is decreased) may improve, provide for, and/or permit formation of the fluid seal between barrier structure 110 and supporting surface 200.

As illustrated in Figs. 5-6, enclosed volume 250 may be bounded and/or defined by supporting surface 200 and first side 114 of barrier structure 110. In addition, and as also illustrated, sealing structure 170 may bound, define, and/or form a periphery of enclosed volume 250. This may be accomplished by surrounding enclosed volume 250 by a continuous length of sealing structure 170, as illustrated in Fig. 4.

Supporting surface 200 may include any suitable surface that may receive charge 810 of composite material and/or may define at least a portion of enclosed volume 250. As an illustrative, non-exclusive example, supporting surface 200 may include a layup mandrel 202, such as an inner mold line layup mandrel and/or an outer mold line layup mandrel, that is configured to define a shape, contour, and/or profile of a composite structure 800 that may be formed from charge 810. Thus, sealing structure 170 may be configured to form the fluid seal between layup mandrel 202 and barrier structure 110.

As another illustrative, non-exclusive example, formation of composite structure 800 may include compacting a plurality of charges 810 of composite material on layup mandrel 202 to generate a plurality of compacted charges 812, which also may be referred to herein as previously compacted charges 812, of composite material prior to compaction of a given charge 810 of composite material. It is within the scope of the present disclosure that given charge 810 of composite material may be compacted at a location that is spaced apart from the plurality of previously compacted charges 812. Under these conditions, supporting surface 200 for the given charge 810 of composite material may be layup mandrels 202, the given charge may be compacted onto layup mandrel 202, and/or sealing structure 170 may form the fluid steal between layup mandrel 202 and barrier structure 110.

Additionally or alternatively, it is also within the scope of the present disclosure that given charge 810 of composite material may be compacted at a location that is proximal to, adjacent to, and/or includes at least one of the plurality of previously compacted charges 812. This may occur when given charge 810 is configured to be adjacent to, to abut, and/or to overlap with at least one of the plurality of previously compacted charges 812. Under these conditions, supporting surface 200 further may include and/or be the one or more previously compacted charges 812, at least a portion of given charge 810 may be compacted onto the one or more previously compacted charges 812, and/or sealing structure 170 may be configured to form the fluid seal between previously compacted charge 812 of composite material and barrier structure 110.

As discussed, charge 810 of composite material may be compacted on supporting surface 200 to form at least a portion of a composite structure 800. Illustrative, non-exclusive examples of composite structures 800 according to the present disclosure include any suitable aircraft 700, portion of an aircraft 700, airframe 710, fuselage 720, fuselage barrel 730, wing 740, or stabilizer 750. Illustrative, non-exclusive examples of charge 810 include any suitable filler 760, stringer 770, and/or skin segment 790 that may form a portion of composite structure 800.

Charge 810 of composite material also may be referred to herein as a mass 810 of composite material, a volume 810 of composite material, and/or a patch 810 of composite material, and may include any suitable structure. As an illustrative, non-exclusive example, charge 810 may include at least one ply of composite material. As another illustrative, non-exclusive example, charge 810 may include at least 2, at least 3, at least 4, at least 5, at least 10, at least 15, or at least 20 stacked plies of composite material and/or charge 810 may include fewer than 80, fewer than 70, fewer than 60, fewer than 50, fewer than 45, fewer than 40, fewer than 35, fewer than 30, fewer than 25, fewer than 20, fewer than 15, or fewer than 10 stacked plies of composite material.

Charge 810 may be formed from and/or include any suitable composite material. As an illustrative, non-exclusive example, charge 810 may include a pre-impregnated composite material. As another illustrative, non-exclusive example, charge 810 may include a plurality of fibers and/or a resin material. Illustrative, non-exclusive examples of fibers include carbon fibers, polymeric fibers, metallic fibers, and/or glass fibers. Illustrative, non-exclusive examples of resin materials include epoxy, adhesive, and/or polymeric resin. As additional illustrative, non-exclusive examples, charge 810 may include a metallic ply, a metallic film, a metallic layer, and/or any suitable combination of the above materials.

As discussed, vacuum compaction device 100 defines at least undeformed configuration 104 and deformed configuration 108. As also discussed, sealing structure 170 may be transitioned from undeformed thickness 172 to deformed thickness 174 when vacuum compaction device 100 transitions from undeformed configuration 104 to deformed configuration 108. Additionally or alternatively, it is also within the scope of the present disclosure that a shape, profile, and/or contour of barrier structure 110 may change depending upon the configuration of vacuum compaction device 100. As an illustrative, non-exclusive example, and when vacuum compaction device 100 is in undeformed configuration 104, barrier structure 110 may include and/or define a planar, or at least substantially planar, shape, profile, and/or contour. As another illustrative, non-exclusive example, and when vacuum compaction device 100 is in deformed configuration 108, a shape, profile, and/or contour of barrier structure 110 (such as a shape, profile, and/or contour of first side 114 and/or second side 116 thereof) may conform, or at least partially conform, to a shape, profile, and/or contour of supporting surface 200. This is illustrated in Figs. 8-10, which provide schematic cross-sectional views of vacuum compaction devices 100 according to the present disclosure compacting a charge 810 of composite material on non-planar supporting surfaces 200.

As illustrated in Fig. 8, supporting surface 200 may include and/or be a convex supporting surface and/or may define a convex shape, profile, and/or contour. Under these conditions, and when vacuum compaction device 100 is positioned on supporting surface 200 and in deformed configuration 108, barrier structure 110 also may define the convex shape, profile, and/or contour.

Additionally or alternatively, and as illustrated in Fig. 9, supporting surface 200 may include and/or be a concave supporting surface and/or may define a concave shape, profile, and/or contour. Under these conditions, and when vacuum compaction device 100 is positioned on supporting surface 200 and in deformed configuration 108, barrier structure 110 also may define a convex shape, profile, and/or contour.

As illustrated in Fig. 10, supporting surface 200 also may include and/or define a discontinuous and/or stepped shape, profile, and/or contour. In Fig. 10, supporting surface 200 is defined by layup mandrel 202 and by previously compacted charge 812 of composite material. In addition, enclosed volume 250 has been evacuated and vacuum compaction device 100 is in deformed configuration 108. In Fig. 10, sealing structure 170 forms a portion of the fluid seal between layup mandrel 202 and barrier structure 110, as indicated at 176, and a portion of the fluid seal between previously compacted charge 812 and barrier structure 110, as indicated at 178. As illustrated, barrier structure 110 is deformed from a planar shape, profile, and/or contour due to application of the vacuum to enclosed volume 250. However, and as discussed, barrier structure 110 may return to the planar contour upon pressurization of enclosed volume 250 and/or removal of the vacuum therefrom.

Fig. 11 provides less schematic but still illustrative, non-exclusive examples of a barrier structure 110 according to the present disclosure. It is within the scope of the present disclosure that barrier structure 110 of Fig. 11 may be utilized with any of the vacuum compaction devices 100 that are disclosed herein and/or may form a portion of and/or be any of the barrier structures 110 that are disclosed herein with reference to any of Figs. 3-12.

Barrier structure 110 of Fig. 11 includes a first planar wall 130, a second, opposed planar wall 132, and a plurality of elongate webs 134 that extend between first planar wall 130 and second planar wall 132. Such a barrier structure 110 also may be referred to herein as a panel 112 and/or a double-walled panel 112. Planar walls 130 and 132, together with the plurality of elongate webs 134, define a plurality of elongate channels 136 that extend within barrier structure 110. It is within the scope of the present disclosure that channels 136 may extend along a longitudinal axis that is parallel to first planar wall 130 and/or second planar wall 132, may extend from an edge 138 of barrier structure 110, may extend from a first edge of barrier structure 110 to a second edge of barrier structure 110, and/or may extend between two opposed edges of barrier structure 110.

First planar wall 130 may define first side 114 of barrier structure 110, and second planar wall 132 may define second side 118 of barrier structure 110. In addition, first planar wall 130 also may define at least a portion of evacuation conduits 122 and/or retention conduits 126, as shown. Evacuation conduits 122 may be in fluid communication with one or more selected elongate channels 136, which also may be referred to herein as evacuation channels 124 and may form a portion of vacuum distribution manifold 140. Thus, and as illustrated by a dashed arrow at 125 in Fig. 11, vacuum source 150 may selectively evacuate (or provide the vacuum to) evacuation channels 124. When barrier structure 110 of Fig. 11 forms a portion of vacuum compaction device 100 and is positioned on supporting surface 200, this vacuum may be utilized to decrease the pressure within enclosed volume 250, as discussed herein.

Similarly, retention conduits 126 may be in fluid communication with one or more selected elongate channels 136, which also may be referred to herein as retention channels 128 and may form a portion of second vacuum distribution manifold 144. Thus, and as illustrated by a dashed arrow at 129 in Fig. 11, vacuum source 150 may selectively evacuate (or provide the vacuum to) retention channels 128. When charge 810 of composite material is located on first surface 114 of barrier structure 110, this vacuum may be utilized to retain charge 810 of composite material on first surface 114 of barrier structure 110, as discussed herein.

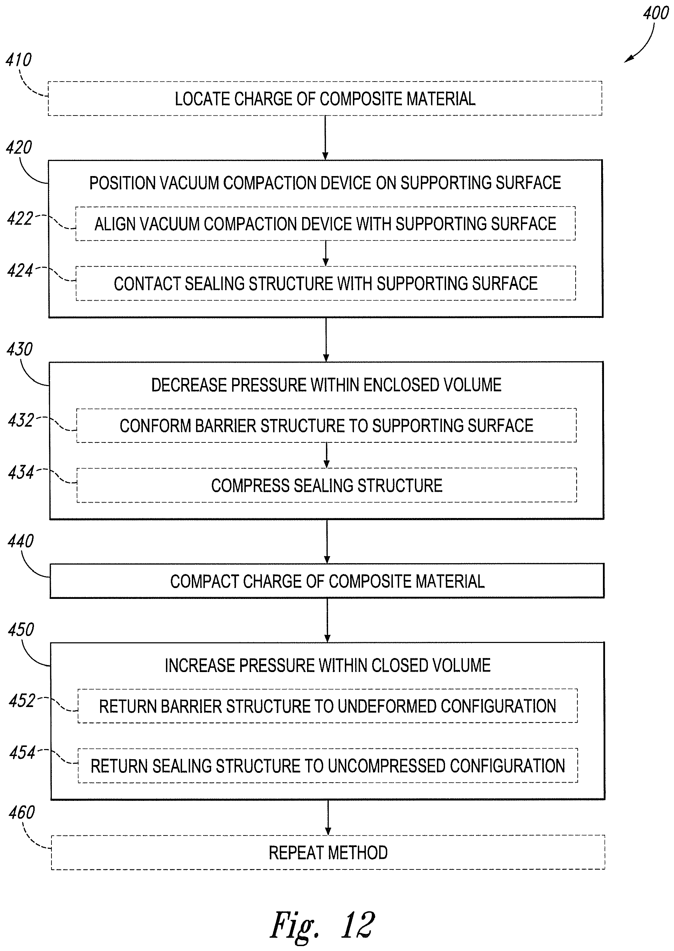

Fig. 12 is a flowchart depicting methods 400 according to the present disclosure of compacting a charge of composite material on a supporting surface. In Fig. 12, some steps are illustrated in dashed boxes, indicating that such steps are optional in certain embodiments or may correspond to an optional version of a method according to the present disclosure. That said, not all methods according to the present disclosure are required to include the steps illustrated in solid boxes. In addition, the methods and steps illustrated in Fig. 12 are not limiting and other methods and steps are within the scope of the present disclosure, including methods having greater than or fewer than the illustrated number of steps, as understood from the discussions herein. Any of these methods may comprise using the device described above with reference to Figures 1 to 11.

With this in mind, methods 400 may include locating a charge of composite material between a vacuum compaction device and a supporting surface at 410 and include positioning the vacuum compaction device on the supporting surface to define an enclosed volume at 420 and decreasing a pressure within the enclosed volume at 430. Methods 400 further include compacting the charge of composite material on the supporting surface at 440 and increasing the pressure within the enclosed volume at 450 and may include repeating the methods at 460.

Locating the charge of composite material between the vacuum compaction device and the supporting surface at 410 may include locating the charge of composite material prior to the positioning at 420. It is within the scope of the present disclosure that the locating at 410 may include locating a single charge of composite material or a plurality of charges of composite material. When the locating at 410 includes locating a plurality of charges of composite material, it is within the scope of the present disclosure that the positioning at 420 may include positioning the vacuum compaction device such that the enclosed volume contains the plurality of charges of composite material and the compacting at 440 may include simultaneously compacting the plurality of charges of composite material.

It is within the scope of the present disclosure that the locating at 410 also may include placing the charge of composite material on the supporting surface. This may include aligning the charge of composite material to the supporting surface, such as through the use of any suitable laser projection system and/or alignment jig. Additionally or alternatively the locating at 410 also may include forming the charge of composite material on the supporting surface. As an illustrative, non-exclusive example, the forming may include laying up a plurality of plies of composite material on the supporting surface to form the charge of composite material. The placing and/or the forming on the supporting surface also may include retaining the charge of composite material on the supporting surface subsequent to the placing and/or the forming, such as through the use of an adhesive.

It is also within the scope of the present disclosure that the locating at 410 also may include placing the charge of composite material on the vacuum compaction device. As an illustrative, non-exclusive example, the vacuum compaction device may include a barrier structure and the placing may include aligning the charge of composite material on the barrier structure. Additionally or alternatively, the locating at 410 also may include forming the charge of composite material on the vacuum compaction device. As an illustrative, non-exclusive example, the forming may include laying up a plurality of plies of composite material on the barrier structure to form the charge of composite material. The placing and/or the forming on the vacuum compaction device also may include retaining the charge of composite material on the vacuum compaction device subsequent to the placing and/or the forming. As an illustrative, non-exclusive example, the retaining may include applying a vacuum to a plurality of retention conduits that are defined by the barrier structure, as discussed herein.

Positioning the vacuum compaction device on the supporting surface to define the enclosed volume at 420 may include defining an enclosed volume that includes and/or contains the charge of composite material. It is within the scope of the present disclosure that the positioning at 420 also may include aligning the vacuum compaction device with the supporting surface at 422. This may include aligning, positioning, locating, and/or otherwise placing the vacuum compaction device such that the enclosed volume is defined by a desired portion of the supporting surface and/or such that the charge of composite material will be compacted on a desired location on the supporting surface. As an illustrative, non-exclusive example, the vacuum compaction device may include and/or define an indexing structure, and the supporting surface may include and/or define a complementary indexing structure. Under these conditions, the aligning at 422 may include aligning the indexing structure with the complementary indexing structure and/or receiving one of the indexing structure and the complementary indexing structure in the other of the indexing structure and the complementary indexing structure to accomplish the aligning.

Additionally or alternatively, the vacuum compaction device also may include a sealing structure that is configured to form a fluid seal between the vacuum compaction device, or the barrier structure thereof, and the supporting surface. Under these conditions, the positioning at 420 also may include contacting the sealing structure with the supporting surface at 424. As illustrative, non-exclusive examples, and as discussed, the supporting surface may include and/or be a layup mandrel and/or a previously compacted charge of composite material, and the contacting may include contacting the layup mandrel and/or the previously compacted charge of composite material with the sealing structure. Additionally or alternatively, the supporting surface may define a stepped profile that is defined by both the layup mandrel and the previously compacted charge of composite material, and the contacting at 424 may include contacting a first portion of the sealing structure with the layup mandrel and contacting a second portion of the sealing structure with the previously compacted charge of composite material.

Decreasing the pressure within the enclosed volume at 430 may include decreasing the pressure subsequent to the positioning at 420 and/or decreasing the pressure to transition the vacuum compaction device from an undeformed configuration to a deformed configuration that is different from the undeformed configuration. As an illustrative, non-exclusive example, the decreasing may include applying a vacuum, such as via any suitable vacuum distribution manifold and/or from any suitable vacuum source, to the enclosed vacuum to decrease the pressure within the enclosed volume and/or to at least partially evacuate the enclosed volume.

It is within the scope of the present disclosure that the decreasing at 430 also may include at least partially conforming the barrier structure to a shape, contour, or profile of the supporting surface at 432. As an illustrative, non-exclusive example, and when the vacuum compaction device is in the undeformed configuration, the barrier structure may include and/or define a planar, or at least substantially planar, shape, contour, or profile. However, and when the vacuum compaction device is in the deformed configuration, such as may occur during the decreasing at 430, the barrier structure may be deformed to a nonplanar, concave, and/or convex contour that may be similar to, or at least partially dependent on, the contour of the supporting surface.

It is also within the scope of the present disclosure that the decreasing at 430 may include compressing the sealing structure at 434. As an illustrative, non-exclusive example, and as discussed, the sealing structure may be located between the barrier structure and the supporting surface and/or may be operatively attached to a first side the barrier structure that faces the supporting surface. Under these conditions, the compressing at 434 may include transitioning the sealing structure from an uncompressed configuration to a compressed configuration, wherein a thickness of the sealing structure in a direction that is perpendicular to the first side of the barrier structure may be greater when the sealing structure is in the uncompressed configuration than when the sealing structure is in the compressed configuration.

Compacting the charge of composite material on the supporting surface at 440 may include compacting and/or compressing the charge of composite material between the vacuum compaction device and the supporting surface to produce, generate, and/or form a compacted charge of composite material on the supporting surface. The compacting at 440 may be at least partially concurrent with the decreasing at 430.

It is within the scope of the present disclosure that the compacting at 440 may include compacting the charge of composite material without "bagging" the charge of composite material, with illustrative, non-exclusive examples of "bagging" being discussed herein. Additionally or alternatively, it is also within the scope of the present disclosure that the compacting at 440 may include compacting the charge of composite material without forming an adhesive bond between the vacuum compaction device and the supporting surface.

Increasing the pressure within the enclosed volume at 450 may include increasing the pressure to transition the vacuum compaction device from the deformed configuration to the undeformed configuration and/or to return the vacuum compaction device to the undeformed configuration. As an illustrative, non-exclusive example, the increasing at 450 may include removing and/or isolating the vacuum from the enclosed volume and/or supplying a bleed gas stream to the enclosed volume to increase the pressure thereof. As additional illustrative, non-exclusive examples, the increasing at 450 may include returning the barrier structure to the undeformed configuration at 452 and/or returning the sealing structure to the uncompressed configuration at 454. The returning at 450 may be subsequent to the decreasing at 430 and/or the compacting at 440.

Repeating the methods at 460 may include repeating any suitable portion of methods 400 based upon any suitable criteria. As an illustrative, non-exclusive example, the charge of composite material may include and/or be a first charge of composite material, and the repeating at 460 may include repeating at least the positioning at 420, the decreasing at 430, the compacting at 440, and the increasing at 450 to compact a subsequent charge of composite material, or a plurality of charges of composite material, on the supporting surface. This may include repeating the methods to form a completed, or at least partially completed, composite structure, illustrative, non-exclusive examples of which are discussed in more detail herein.

It is within the scope of the present disclosure that the repeating at 460 may include transitioning the vacuum compaction device from the undeformed configuration to the deformed configuration and subsequently returning the vacuum compaction device to the undeformed configuration a plurality of times (i.e., reusing the vacuum compaction device to compact the plurality of charges of composite material). Additionally or alternatively, it is also within the scope of the present disclosure that the repeating at 460 may include repeating without damage to the vacuum compaction device, without "bagging" a respective charge of composite material of the plurality of charges of composite material, and/or without adhering the vacuum compaction device to the supporting surface.

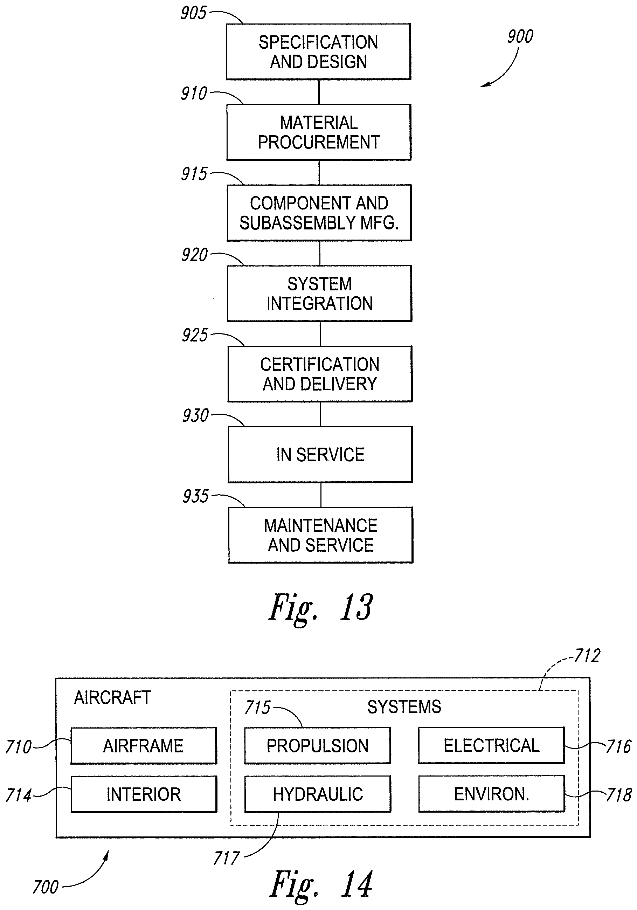

Referring now to Figs. 13-14, embodiments of the disclosure may be described in the context of an aircraft manufacturing and service method 900, as shown in Fig. 13, and an aircraft 700, as shown in Fig. 14. During pre-production, exemplary method 900 may include specification and design 905 of the aircraft 700 and material procurement 910. During production, component and subassembly manufacturing 915 and system integration 920 of the aircraft 700 takes place. Thereafter, the aircraft 700 may go through certification and delivery 925 in order to be placed in service 930. While in service by a customer, the aircraft 700 is scheduled for routine maintenance and service 935 (which also may include modification, reconfiguration, refurbishment, and so on).

Each of the processes of method 900 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in Fig. 14, the aircraft 700 produced by exemplary method 900 may include an airframe 710 with a plurality of systems 712 and an interior 714. Examples of high-level systems 712 include one or more of a propulsion system 715, an electrical system 716, a hydraulic system 717, and an environmental system 718. Any number of other systems may be included. Although an aerospace example is shown, the principles of the invention may be applied to other industries, such as the automotive industry.

Apparatus and methods embodied herein may be employed during any one or more of the stages of the manufacturing and service method 900. For example, components or subassemblies corresponding to component and subassembly manufacturing process 915 may be fabricated or manufactured in a manner similar to components or subassemblies produced while the aircraft 700 is in service. Also, one or more apparatus embodiments, method embodiments, or a combination thereof may be utilized during the production stages 915 and 920, for example, by substantially expediting assembly of or reducing the cost of an aircraft 700. Similarly, one or more of apparatus embodiments, method embodiments, or a combination thereof may be utilized while the aircraft 700 is in service, for example and without limitation, to maintenance and service 935.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. A vacuum compaction device (100) for compacting a charge of composite material (810) on a supporting surface (200), wherein the device is configured to be positioned on the supporting surface (200) to define an enclosed volume, the device comprising:
a barrier structure (110) that includes a first side and an opposed second side;
a sealing structure (170) that is configured to form a fluid seal between the supporting surface (200) and the barrier structure (110) when compressed therebetween; and
a vacuum distribution manifold (140) that is in fluid communication with and configured to selectively apply a vacuum to the enclosed volume;
wherein the barrier structure (110) is defined by a first planar wall (130), a second planar wall (132), and a plurality of elongate webs (134) that extend between the first planar wall and the second planar wall, wherein the first planar wall, the second planar wall, and the plurality of elongate webs define a plurality of elongate channels (136), and further wherein the plurality of elongate channels defines at least a portion of the vacuum distribution manifold (140).

2. The device of claim 1, wherein the barrier structure (110) further includes a release surface (116) that defines the first side of the barrier structure (110), wherein the release surface (116) includes at least one of a material that is selected to not adhere to the charge of composite material (810), a material that is selected to not react with the charge of composite material (810), and a fluoropolymer.

3. The device of claim 1 or claim 2, wherein the first side of the barrier structure (110) further defines a plurality of retention conduits (126) that are in fluid communication with the enclosed volume.

4. The device of any preceding claim, wherein the sealing structure (170) is located between the barrier structure (110) and the supporting surface (200) when the vacuum compaction device (100) is positioned on the supporting surface (200).

5. The device of any preceding claim, wherein the sealing structure (170) includes at least one of a compression seal, a resilient seal, and a tubular resilient seal.

6. The device of any preceding claim, wherein the device includes an undeformed configuration when not positioned on the supporting surface (200) and the vacuum is not applied to the enclosed volume and a deformed configuration when positioned on the supporting surface (200) and the vacuum is applied to the enclosed volume.

7. The device of claim 6, wherein the barrier structure (110) is planar when the device is in the undeformed configuration, and further wherein the barrier structure (110) at least partially conforms to a contour of the supporting surface (200) when the device is in the deformed configuration, wherein the contour of the supporting surface (200) includes at least a non-planar contour.

8. The device of claim 6 or 7, wherein the sealing structure (170) defines a thickness that is measured in a direction that is perpendicular to the first side of the barrier structure (110), wherein the thickness includes an undeformed thickness when the device is in the undeformed configuration and a deformed thickness when the device is in the deformed configuration, and further wherein the deformed thickness is less than the undeformed thickness.

9. The device of any preceding claim, wherein the vacuum compaction device (100) is a reusable vacuum compaction device that is configured to compact a plurality of charges of composite material (810) on the supporting surface (200) without damage to the vacuum compaction device (100).

10. A method of compacting a charge of composite material (810) on a supporting surface (200), the method comprising:
positioning (420) a vacuum compaction device (100) on the supporting surface (200) to define an enclosed volume that contains the charge of composite material (810);
decreasing (430) a pressure within the enclosed volume to transition the vacuum compaction device (100) from an undeformed configuration to a deformed configuration that is different from the undeformed configuration;
compacting (440) the charge of composite material (810) between the vacuum compaction device (100) and the supporting surface (200); and
increasing (450) the pressure within the enclosed volume to return the vacuum compaction device (100) to the undeformed configuration;
wherein the vacuum compaction device (100) further includes a barrier structure (110) defined by a first planar wall (130), a second planar wall (132), and a plurality of elongate webs (134) that extend between the first planar wall and the second planar wall, wherein the first planar wall, the second planar wall, and the plurality of elongate webs define a plurality of elongate channels (136), and further wherein the plurality of elongate channels defines at least a portion of a vacuum distribution manifold (140).

11. The method of claim 10, wherein the vacuum compaction device (100) further includes a sealing structure (170) that is operatively attached to a first side of a barrier structure (110), wherein the decreasing (430) includes compressing the sealing structure (170) between the barrier structure (110) and the supporting surface (200) to transition the sealing structure (170) from an uncompressed configuration to a compressed configuration that is different from the uncompressed configuration, and further wherein the increasing (450) includes returning the sealing structure (170) to the uncompressed configuration.

12. The method of claim 10 or 11, wherein the positioning (420) includes contacting a sealing structure (170) of the vacuum compaction device (100) with the supporting surface (200), wherein a portion of the supporting surface (200) is defined by a previously compacted charge of composite material (812), and further wherein the positioning (420) includes contacting the sealing structure (170) with the previously compacted charge of composite material (812).

13. The method of claims 10 to 12, wherein the charge of composite material (810) is a first charge of composite material, and further wherein the method includes repeating (460) the method to compact a plurality of charges of composite material (810) on the supporting surface (200), wherein the repeating (460) includes transitioning the vacuum compaction device (100) from the undeformed configuration to the deformed configuration and subsequently returning the vacuum compaction device (100) to the undeformed configuration a plurality of times without damage to the vacuum compaction device (100).

## Patentansprüche

1. Vakuumverdichtungsvorrichtung (100) zum Verdichten einer Ladung aus Verbundwerkstoff (810) auf einer Stützfläche (200), wobei die Vorrichtung dazu konfiguriert ist, auf der Stützfläche (200) positioniert zu werden, um ein umschlossenes Volumen zu definieren, wobei die Vorrichtung aufweist:
eine Barrierestruktur (110), die eine erste Seite und eine gegenüberliegende zweite Seite aufweist;
eine Dichtungsstruktur (170), die dazu konfiguriert ist, eine Fluiddichtung zwischen der Stützfläche (200) und der Barrierestruktur (110) zu bilden, wenn sie dazwischen komprimiert wird; und
ein Vakuumverteilerrohr (140), das mit dem umschlossenen Volumen in Fluidverbindung steht und dazu konfiguriert ist, selektiv ein Vakuum an das umschlossene Volumen anzulegen;
wobei die Barrierestruktur (110) durch eine erste planare Wand (130), eine zweite planare Wand (132) und eine Vielzahl länglicher Stege (134) definiert ist, die sich zwischen der ersten planaren Wand und der zweiten planaren Wand erstrecken, wobei die erste planare Wand, die zweite planare Wand und die Vielzahl länglicher Stege eine Vielzahl länglicher Kanäle (136) definieren, und wobei des Weiteren die Vielzahl länglicher Kanäle wenigstens einen Abschnitt des Vakuumverteilerrohrs (140) bilden.

2. Vorrichtung nach Anspruch 1, wobei die Barrierestruktur (110) des Weiteren eine Freigabefläche (116) aufweist, die die erste Seite der Barrierestruktur (110) definiert, wobei die Freigabefläche (116) wenigstens eines aufweist von einem Material, das dazu ausgewählt ist, nicht an der Ladung aus Verbundwerkstoff (810) anzuhaften, einem Material, das dazu ausgewählt ist, nicht mit der Ladung aus Verbundwerkstoff (810) zu reagieren, und einem Fluorpolymer.

3. Vorrichtung nach Anspruch 1 oder Anspruch 2, wobei die erste Seite der Barrierestruktur (110) des Weiteren eine Vielzahl von Retentionsleitungen (125) aufweist, die mit dem umschlossenen Volumen in Fluidverbindung stehen.

4. Vorrichtung nach einem der vorhergehenden Ansprüche, wobei die Dichtungsstruktur (170) zwischen der Barrierestruktur (110) und der Stützfläche (200) angeordnet ist, wenn die Vakuumverdichtungsvorrichtung (100) auf der Stützfläche (200) positioniert ist.

5. Vorrichtung nach einem der vorhergehenden Ansprüche, wobei die Dichtungsstruktur (170) wenigstens eines aufweist von einer Kompressionsdichtung, einer elastischen Dichtung und einer rohrförmigen elastischen Dichtung.

6. Vorrichtung nach einem der vorhergehenden Ansprüche, wobei die Vorrichtung eine nicht verformte Konfiguration aufweist, wenn sie nicht auf der Stützfläche (200) positioniert ist und das Vakuum nicht an das umschlossene Volumen angelegt ist, und eine verformte Konfiguration, wenn sie auf der Stützfläche (200) positioniert ist und das Vakuum an das umschlossene Volumen angelegt ist.

7. Vorrichtung nach Anspruch 6, wobei die Barrierestruktur (110) planar ist, wenn sich die Vorrichtung in der nicht verformten Konfiguration befindet, und wobei des Weiteren die Barrierestruktur (110) wenigstens teilweise mit einer Kontur der Stützfläche (200) übereinstimmt, wenn sich die Vorrichtung in der verformten Konfiguration befindet, wobei die Kontur der Stützfläche (200) wenigstens eine nicht planare Kontur aufweist.

8. Vorrichtung nach Anspruch 6 oder 7, wobei die Dichtungsstruktur (170) eine Dicke definiert, die in einer Richtung gemessen wird, welche senkrecht zu der ersten Seite der Barrierestruktur (110) ist, wobei die Dicke eine nicht verformte Dicke aufweist, wenn sich die Vorrichtung in der nicht verformten Konfiguration befindet, und eine verformte Dicke, wenn sich die Vorrichtung in der verformten Konfiguration befindet, und wobei des Weiteren die verformte Dicke geringer als die nicht verformte Dicke ist.

9. Vorrichtung nach einem der vorhergehenden Ansprüche, wobei die Vakuumverdichtungsvorrichtung (100) eine wiederverwendbare Vakuumverdichtungsvorrichtung ist, die dazu konfiguriert ist, eine Vielzahl von Ladungen aus Verbundwerkstoff (810) auf der Stützfläche (200) ohne Beschädigung der Vakuumverdichtungsvorrichtung (100) zu verdichten.

10. Verfahren zum Verdichten einer Ladung aus Verbundwerkstoff (810) auf einer Stützfläche (200), wobei das Verfahren aufweist:
Positionieren (420) einer Vakuumverdichtungsvorrichtung (100) auf der Stützfläche (200), um ein umschlossenes Volumen zu definieren, das die Ladung aus Verbundwerkstoff (810) enthält;
Verringern (430) des Drucks in dem umschlossenen Volumen, um die Vakuumverdichtungsvorrichtung (100) von einer nicht verformten Konfiguration in eine verformte Konfiguration zu überführen, die sich von der nicht verformten Konfiguration unterscheidet;
Verdichten (440) der Ladung aus Verbundwerkstoff (810) zwischen der Vakuumverdichtungsvorrichtung (100) und der Stützfläche (200); und
Erhöhen (450) des Drucks in dem umschlossenen Volumen, um die Vakuumverdichtungsvorrichtung (100) in die nicht verformte Konfiguration zurückzuführen;
wobei die Vakuumverdichtungsvorrichtung (100) des Weiteren eine Barrierestruktur (110) aufweist, die durch eine erste planare Wand (130), eine zweite planare Wand (132) und eine Vielzahl länglicher Stege (134) definiert wird, welche sich zwischen der ersten planaren Wand und der zweiten planaren Wand erstrecken, wobei die erste planare Wand, die zweite planare Wand und die Vielzahl länglicher Stege eine Vielzahl länglicher Kanäle (136) definieren, und wobei des Weiteren die Vielzahl länglicher Kanäle wenigstens einen Abschnitt eines Vakuumverteilerrohrs (140) definiert.

11. Verfahren nach Anspruch 10, wobei die Vakuumverdichtungsvorrichtung (100) des Weiteren eine Dichtungsstruktur (170) aufweist, die betriebsbereit an einer ersten Seite einer Barrierestruktur (110) befestigt ist, wobei das Verringern (430) das Komprimieren der Dichtungsstruktur (170) zwischen der Barrierestruktur (110) und der Stützfläche (200) aufweist, um die Dichtungsstruktur (170) von einer unkomprimierten Konfiguration in eine komprimierte Konfiguration zu überführen, die sich von der unkomprimierten Konfiguration unterscheidet, und wobei des Weiteren das Erhöhen (450) das Zurückführen der Dichtungsstruktur (170) in die unkomprimierte Konfiguration aufweist.

12. Verfahren nach Anspruch 10 oder 11, wobei das Positionieren (420) das Kontaktieren einer Dichtungsstruktur (170) der Vakuumverdichtungsvorrichtung (100) mit der Stützfläche (200) aufweist, wobei ein Abschnitt der Stützfläche (200) durch eine vorher verdichtete Ladung aus Verbundwerkstoff (812) definiert wird, und wobei des Weiteren das Positionieren (420) das Kontaktieren der Dichtungsstruktur (170) mit der vorher verdichteten Ladung aus Verbundwerkstoff (812) aufweist.

13. Verfahren nach den Ansprüchen 10 bis 12, wobei die Ladung aus Verbundwerkstoff (810) eine erste Ladung aus Verbundwerkstoff ist, und wobei des Weiteren das Verfahren das Wiederholen (460) des Verfahrens aufweist, um eine Vielzahl von Ladungen aus Verbundwerkstoff (810) auf der Stützfläche (200) zu verdichten, wobei das Wiederholen (460) das mehrmalige Überführen der Vakuumverdichtungsvorrichtung (100) von der nicht verformten Konfiguration in die verformte Konfiguration und danach das mehrmalige Zurückführen der Vakuumverdichtungsvorrichtung (100) in die nicht verformte Konfiguration ohne Beschädigung der Vakuumverdichtungsvorrichtung (100) aufweist.

## Revendications

1. Dispositif de compactage sous vide (100) destiné à compacter une charge de matériau composite (810) sur une surface de support (200), dans lequel le dispositif est configuré pour être positionné sur la surface de support (200) pour définir un volume clos, le dispositif comprenant :
une structure de barrière (110) qui comporte un premier côté et un second côté opposé ;
une structure d'étanchéification (170) qui est configurée pour former un joint d'étanchéité aux fluides entre la surface de support (200) et la structure de barrière (110) lorsqu'elle est comprimée entre l'une et l'autre ; et
un collecteur de distribution sous vide (140) qui est en communication fluidique avec le volume clos et configuré pour appliquer un vide à celui-ci ;
dans lequel la structure de barrière (110) est définie par une première paroi plane (130), une seconde paroi plane (132), et une pluralité d'âmes allongées (134) qui s'étendent entre la première paroi plane et la seconde paroi plane, dans lequel la première paroi plane, la seconde paroi plane, et la pluralité d'âmes allongées définissent une pluralité de canaux allongés (136), et dans lequel en outre la pluralité de canaux allongés définit au moins une partie du collecteur de distribution sous vide (140).

2. Dispositif selon la revendication 1, dans lequel la structure de barrière (110) comporte en outre une surface de relâchement (116) qui définit le premier côté de la structure de barrière (110), dans lequel la surface de relâchement (116) comporte au moins un matériau parmi un matériau qui est choisi pour ne pas adhérer à la charge de matériau composite (810), un matériau qui est choisi pour ne pas réagir avec la charge de matériau composite (810), et un fluoropolymère.

3. Dispositif selon la revendication 1 ou la revendication 2, dans lequel le premier côté de la structure de barrière (110) définit en outre une pluralité de conduits de rétention (126) qui sont en communication fluidique avec le volume clos.

4. Dispositif selon une quelconque revendication précédente, dans lequel la structure d'étanchéification (170) est située entre la structure de barrière (110) et la surface de support (200) lorsque le dispositif de compactage sous vide (100) est positionné sur la surface de support (200).

5. Dispositif selon une quelconque revendication précédente, dans lequel la structure d'étanchéification (170) comporte au moins un joint d'étanchéité parmi un joint de compression, un joint résilient et un joint résilient tubulaire.

6. Dispositif selon une quelconque revendication précédente, dans lequel le dispositif comporte une configuration non-déformée lorsqu'il n'est pas positionné sur la surface de support (200) et le vide n'est pas appliqué au volume clos et une configuration déformée lorsqu'il est positionné sur la surface de support (200) et le vide est appliqué au volume clos.

7. Dispositif selon la revendication 6, dans lequel la structure de barrière (110) est plane lorsque le dispositif est dans la configuration non-déformée, et dans lequel en outre la structure de barrière (110) se conforme au moins partiellement à un contour de la surface de support (200) lorsque le dispositif est dans la configuration déformée, le contour de la surface de support (200) comportant au moins un contour non-plan.

8. Dispositif selon la revendication 6 ou 7, dans lequel la structure d'étanchéification (170) définit une épaisseur qui est mesurée dans une direction qui est perpendiculaire au premier côté de la structure de barrière (110), dans lequel l'épaisseur comporte une épaisseur non-déformée lorsque le dispositif est dans la configuration non-déformée et une épaisseur déformée lorsque le dispositif est dans la configuration déformée, et dans lequel en outre l'épaisseur déformée est inférieure à l'épaisseur non-déformée.

9. Dispositif selon une quelconque revendication précédente, dans lequel le dispositif de compactage sous vide (100) est un dispositif de compactage sous vide réutilisable qui est configuré pour compacter une pluralité de charges de matériau composite (810) sur la surface de support (200) sans endommager le dispositif de compactage sous vide (100).

10. Procédé destiné à compacter une charge de matériau composite (810) sur une surface de support (200), le procédé comprenant :
le positionnement (420) d'un dispositif de compactage sous vide (100) sur la surface de support (200) pour définir un volume clos qui contient la charge de matériau composite (810) ;
la diminution (430) d'une pression au sein du volume clos pour faire passer le dispositif de compactage sous vide (100) d'une configuration non-déformée vers une configuration déformée qui est différente de la configuration non-déformée ;
le compactage (440) de la charge de matériau composite (810) entre le dispositif de compactage sous vide (100) et la surface de support (200) ; et
l'augmentation (450) de la pression au sein du volume clos pour faire retourner le dispositif de compactage sous vide (100) vers la configuration non-déformée ;
dans lequel le dispositif de compactage sous vide (100) comporte en outre une structure de barrière (110) définie par une première paroi plane (130), une seconde paroi plane (132), et une pluralité d'âmes allongées (134) qui s'étendent entre la première paroi plane et la seconde paroi plane, dans lequel la première paroi plane, la seconde paroi plane, et la pluralité d'âmes allongées définissent une pluralité de canaux allongés (136), et dans lequel en outre la pluralité de canaux allongés définit au moins une partie du collecteur de distribution sous vide (140).

11. Procédé selon la revendication 10, dans lequel le dispositif de compactage sous vide (100) comporte en outre une structure d'étanchéification (170) qui est attachée en fonctionnement à un premier côté d'une structure de barrière (110), dans lequel la diminution (430) comporte la compression de la structure d'étanchéification (170) entre la structure de barrière (110) et la surface de support (200) pour faire passer la structure d'étanchéification (170) d'une configuration non-compressée vers une configuration compressée qui est différente de la configuration non-compressée, et dans lequel en outre l'augmentation (450) comporte le retour de la structure d'étanchéification (170) vers la configuration non-compressée.

12. Procédé selon la revendication 10 ou 11, dans lequel le positionnement (420) comporte la mise en contact d'une structure d'étanchéification (170) du dispositif de compactage sous vide (100) avec la surface de support (200), dans lequel une partie de la surface de support (200) est définie par une charge de matériau composite (812) préalablement compactée, et dans lequel en outre le positionnement (420) comporte la mise en contact de la structure d'étanchéification (170) avec la charge de matériau composite (812) préalablement compactée.

13. Procédé selon les revendications 10 à 12, dans lequel la charge de matériau composite (810) est une première charge de matériau composite, et dans lequel en outre le procédé comporte la répétition (460) du procédé pour compacter une pluralité de charges de matériau composite (810) sur la surface de support (200), dans lequel la répétition (460) comporte le passage du dispositif de compactage sous vide (100) de la configuration non-déformée vers la configuration déformée et ensuite le retour du dispositif de compactage sous vide (100) vers la configuration non-déformée une pluralité de fois sans endommager le dispositif de compactage sous vide (100).
